# FASCICULE DE BREVET EUROPEEN

(11) **EP 2 862 180 B1**
(45) Date de publication et mention de la délivrance du brevet: **20.07.2016**
(21) Numéro de dépôt: 13728742.1
(22) Date de dépôt: 13.06.2013
(51) Int. Cl.: G21C 19/07, G21F 5/005, G21F 5/14

(54) **PROCEDE OPTIMISE DE CHARGEMENT D'ELEMENTS RADIOACTIFS DANS UN EMBALLAGE**
OPTIMIERTES VERFAHREN ZUM LADEN VON RADIOAKTIVEN ELEMENTEN IN EINE VERPACKUNG
OPTIMISED METHOD FOR LOADING RADIOACTIVE ELEMENTS INTO A PACKAGE

(30) Priorité: 15.06.2012 FR 1255601
(43) Date de publication de la demande: 22.04.2015
(73) Titulaire: TN International, 78180 Montigny Le Bretonneux (FR)
(72) Inventeur: LELEU, Gilda, F-75005 Paris (FR); VAUDRAY, Hervé, F-75006 Paris (FR)
(74) Mandataire: Brevalex
(86) Numéro de dépôt international: PCT/EP2013/062275
(87) Numéro de publication internationale: WO 2013/186312

(56) Documents cités:
- FR-A- 2 465 298
- US-A- 5 661 768

## Description

### DOMAINE TECHNIQUE

L'invention se rapporte au domaine du chargement d'éléments radioactifs dans un emballage. Elle concerne en particulier le chargement d'éléments radioactifs situés en piscine, vers un emballage sous atmosphère gazeuse, de préférence à l'air ambiant.

L'invention s'applique de préférence au chargement d'éléments radioactifs du type guides de grappe usés d'un réacteur nucléaire, mais peut s'appliquer à tout autre élément radioactif comme des assemblages de combustible irradiés.

### ETAT DE LA TECHNIQUE ANTERIEURE

Les guides de grappe d'un réacteur nucléaire doivent être remplacés lorsqu'ils sont usés. Pour ce faire, ils sont tout d'abord extraits du réacteur et placés à proximité de la cuve, sans être extraits de la piscine. Ces guides de grappe sont alors extraits de la piscine depuis les Equipements Internes Supérieurs, également dénommés « EIS », puis transférés directement un par un via une hotte de transfert, vers un conteneur de transport et/ou d'entreposage situé à l'air ambiant.

Pour ce faire, la hotte de transfert ouverte à ses deux extrémités opposées est disposée affleurante à la surface de la piscine, au-dessus d'un guide de grappe. Celui-ci est ensuite extrait de la piscine et inséré dans la hotte de transfert, grâce à un système de manutention relié au guide de grappe. Après cette opération, le guide de grappe est entouré par cette hotte qui forme une protection radiologique. L'ensemble obtenu est alors déplacé au-dessus du conteneur comprenant un emballage logeant un panier de rangement des guides de grappe. Pendant que la hotte est maintenue en place sur le dessus du conteneur, le guide de grappe est déplacé vers le bas pour être amené dans l'un des logements du panier.

Cette succession d'opérations est ainsi répétée autant de fois qu'il y a de guides de grappe à placer dans le conteneur, généralement entre dix et vingt.

Cette solution n'est donc pas entièrement optimisée, car elle ne permet pas une exploitation rapide en raison du très grand nombre d'opérations à mettre en oeuvre pour aboutir au chargement de tous les guides de grappe dans le conteneur. De plus, même si la hotte de transfert a pour fonction d'apporter une protection radiologique aux opérateurs durant le passage de chaque guide de grappe entre la piscine et le conteneur, l'exposition au rayonnement reste importante.

Des inconvénients analogues sont observés quelle que soit la nature des éléments radioactifs à charger, dès que ces derniers doivent être sortis de leur piscine pour être introduits dans un emballage sous atmosphère gazeuse, habituellement l'air ambiant.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de chargement d'éléments radioactifs dans un emballage, comprenant les étapes successives suivantes :
(a) mise en place, en piscine, d'une pluralité d'éléments radioactifs dans un panier de rangement équipé de moyens de protection radiologique ;
(b) extraction, en dehors de la piscine, du panier chargé des éléments radioactifs ; et
(c) chargement dans l'emballage dudit panier chargé des éléments radioactifs.

L'invention rompt ainsi avec la pratique habituelle visant à transférer un par un les éléments radioactifs sous eau vers un emballage sec. Cela est rendu possible par l'utilisation d'un panier à blindage radiologique dans lequel plusieurs éléments radioactifs sont logés alors même qu'ils se trouvent encore sous eau, ce panier étant ensuite extrait de la piscine pour être placé dans l'emballage, en vue de l'entreposage et/ou du transport de ces éléments radioactifs.

De manière conventionnelle, il est entendu par « panier » une structure ouverte qui n'est absolument pas conçue pour réaliser le confinement des éléments radioactifs qui y sont placés. Au contraire, le panier est conçu pour laisser l'eau s'en écouler lors de l'extraction de la piscine. Aucun système de fermeture n'est donc préférentiellement prévu sur le panier, le confinement des éléments radioactifs étant assuré uniquement par l'emballage.

Le panier servant de moyen de transfert des éléments radioactifs entre la piscine et l'emballage, il n'est donc plus requis de hotte de transfert comme dans l'art antérieur. Cela permet ainsi de diminuer les coûts de mise en oeuvre du procédé de chargement. Ces coûts sont également diminués grâce à l'optimisation du temps d'intervention, qui est réduit par le fait de charger simultanément plusieurs éléments radioactifs dans l'emballage, mais également car il n'y a plus besoin de réaliser d'accostage de la hotte sur l'emballage. Cette diminution du temps de mise en oeuvre se traduit aussi directement par une réduction du temps d'exposition des opérateurs au rayonnement.

De préférence, chaque élément radioactif repose par gravité dans son panier de rangement. Cette conception facilite l'étape de chargement en piscine des éléments radioactifs dans le panier.

De préférence, chaque panier présente une pluralité de logements dans chacun desquels est placé l'un des éléments radioactifs.

De préférence, les étapes (a) à (c) sont répétées plusieurs fois de manière à ce que plusieurs paniers soient chargés dans ledit emballage. Le fait de prévoir plusieurs paniers permet de réduire la taille de ces derniers, et apporte en particulier une réponse satisfaisante aux contraintes d'exploitation liées au faible volume disponible dans la piscine pour accueillir les paniers.

Les paniers logés dans l'emballage définissent alors ensemble, préférentiellement, une surface latérale extérieure sensiblement complémentaire de la surface latérale d'une cavité de l'emballage dans laquelle ils sont logés. Ainsi, une fois placés dans la cavité, les paniers sont parfaitement maintenus en position dans cette même cavité, par complémentarité de forme. Cette particularité peut également être retenue lorsqu'un unique panier est destiné à être logé dans la cavité de l'emballage, quelle que soit d'ailleurs la forme de cette cavité, à laquelle la surface latérale extérieure du/des paniers peut être adaptée.

De préférence, il est également prévu des moyens de protection radiologique équipant l'emballage. Ils viennent donc s'ajouter à ceux équipant le panier de rangement. Naturellement, les moyens de protection radiologique équipant le panier et l'emballage sont prévus pour répondre aux critères réglementaires de transport et/ou d'entreposage des éléments radioactifs.

De préférence, l'emballage est fermé par un couvercle après le chargement dudit panier chargé des éléments radioactifs dans la cavité de l'emballage. Ce panier est donc dédié à rester à demeure dans l'emballage durant le transport et/ou l'entreposage des éléments radioactifs, afin de former avec lui un conteneur.

De préférence, chaque panier de rangement loge entre cinq et dix éléments radioactifs. Ainsi, lorsqu'il y a deux paniers prévus pour être logés dans une même cavité d'emballage, ce dernier est alors prévu pour contenir entre dix et vingt éléments radioactifs.

De préférence, lesdits éléments radioactifs sont des guides de grappe usés ou des assemblages de combustible irradiés. D'autres types d'éléments radioactifs peuvent néanmoins être concernés, sans sortir du cadre de l'invention.

Enfin, l'invention a également pour objet un procédé de transport et/ou d'entreposage d'éléments radioactifs comprenant, avant ledit transport et/ou l'entreposage, la mise en oeuvre du procédé de chargement tel que décrit ci-dessus. Ce transport sur voie publique et/ou entreposage sur site s'effectue par conséquent avec le panier blindé, chargé des éléments radioactifs, logé dans l'emballage prévu à cet effet.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe d'une partie d'un réacteur nucléaire ;
- la figure 2 représente une première étape d'un mode de réalisation préféré du procédé selon l'invention, visant à la mise en place, en piscine, des guides de grappe dans deux paniers de rangement blindés ;
- la figure 3 représente une vue détaillée en perspective des paniers de rangement de la figure précédente, chargés des guides de grappe ;
- les figures 4 à 5 représentent une étape ultérieure du procédé, visant à charger les paniers de rangement dans un emballage ;
- la figure 6 représente une vue en coupe transversale prise selon le plan P de la figure 5 ;
- la figure 7 représente une vue en perspective d'un quart du conteneur formé par l'emballage et les paniers de rangement logés dans celui-ci ; et
- la figure 8 est une vue agrandie d'une partie de celle de la figure 7, sur laquelle des cotes ont été ajoutées.

### EXPOSÉ DÉTAILLÉ DE MODES DE RÉALISATION PRÉFÉRÉS

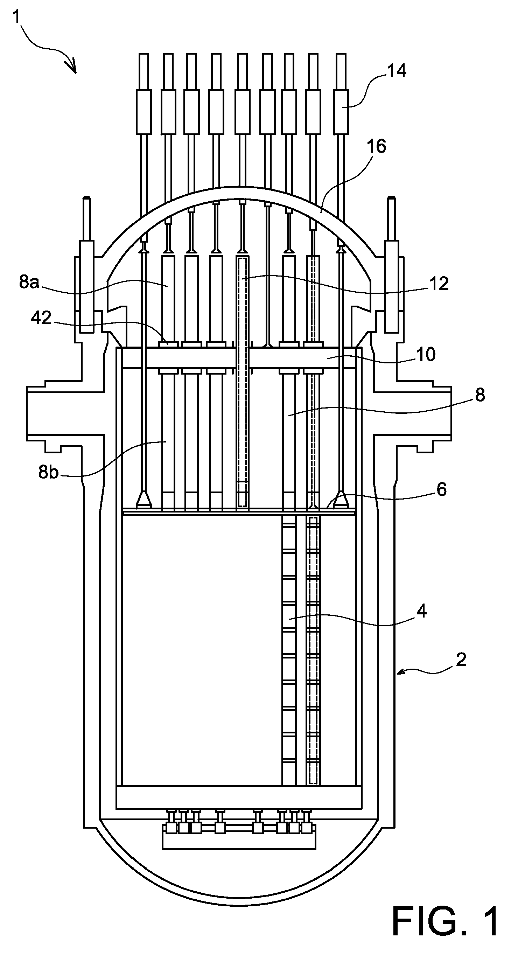

En référence tout d'abord à la figure 1, il est montré un réacteur nucléaire 1 du type à eau pressurisée, selon une configuration classique qui va brièvement être décrite ci-dessous.

Le réacteur comporte une cuve 2 au fond de laquelle sont placés des assemblages de combustible nucléaire 4, formant le coeur du réacteur. Une plaque supérieure de coeur 6 vient recouvrir les assemblages 4, et sépare ces derniers d'une série de guides de grappe 8 chacun aligné avec un assemblage de combustible 4. Les guides 8, en forme générale de fourreau, présentent une conception en deux parties, à savoir une partie supérieure 8a et une partie inférieure 8b reliées l'une à l'autre par une bride 42. Les guides de grappe sont solidarisés via cette bride 42 à une plaque support de guides de grappe 10, pour former ensemble les Equipements Internes Supérieurs, également dénommés « EIS ». Enfin, une grappe de contrôle 12 est associée à chacun des guides de grappe, en étant commandée par un mécanisme de commande 14 situé en partie au-dessus du couvercle 16 de la cuve.

Les grappes de contrôle 12, appelées également grappes de commande, servent à piloter le réacteur 1. Elles sont formées de plusieurs barres ou crayons fabriqués avec des métaux absorbant de neutrons, et logées à coulissement dans les guides de grappe 8. La réaction en chaîne du réacteur produisant un surplus de neutrons, les grappes permettent le réglage de la puissance. De plus, en cas d'incident, elles sont en mesure de stopper très rapidement la réaction nucléaire en s'insérant par gravité parmi les crayons combustibles des assemblages 4, par coulissement à travers leurs guides de grappe 8.

Du fait de leur positionnement au-dessus des assemblages 4 dans le réacteur, la partie inférieure des guides de grappe 8 est fortement activée lors du fonctionnement du réacteur. En conséquence, cette partie présente un fort niveau de rayonnement gamma.

Dans la suite de la description, il va être décrit un mode de réalisation préféré du procédé selon l'invention, visant au chargement des guides de grappe 8 dans un emballage. Ce procédé est mis en oeuvre lorsque les guides 8 sont usés, et qu'ils doivent être remplacés par des guides de grappe neufs.

Tout d'abord, il est noté que l'ensemble des EIS est préalablement extrait du réacteur, et placé dans une piscine de travail à côté de la cuve. Les guides 8 sont ensuite désolidarisés de la plaque support 10 (montrée sur la figure 1), puis placés dans un ou plusieurs paniers de rangement 30, spécifiques à la présente invention. Au préalable, ces paniers peuvent servir de dispositifs de rangement pour les guides de grappe neufs destinés à remplacer les guides usés dans le réacteur. Ainsi, les guides neufs sont interchangés avec les guides usés 8 au fur et à mesure du transfert de ces derniers vers les paniers 30.

Chaque panier de rangement présente des moyens de protection radiologique, essentiellement vis-à-vis du rayonnement gamma. Ces moyens prennent ici la forme d'une paroi latérale épaisse 32 en acier ou matériau analogue, destinée à recouvrir la partie inférieure activée des guides de grappe. Dans cette solution à deux paniers 30, chacune des deux parois 32 présente une section semi-circulaire.

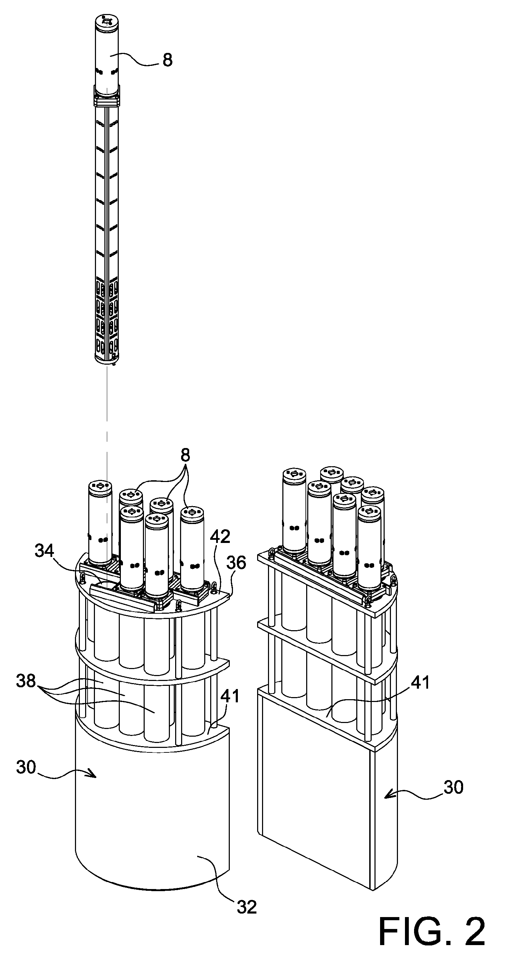

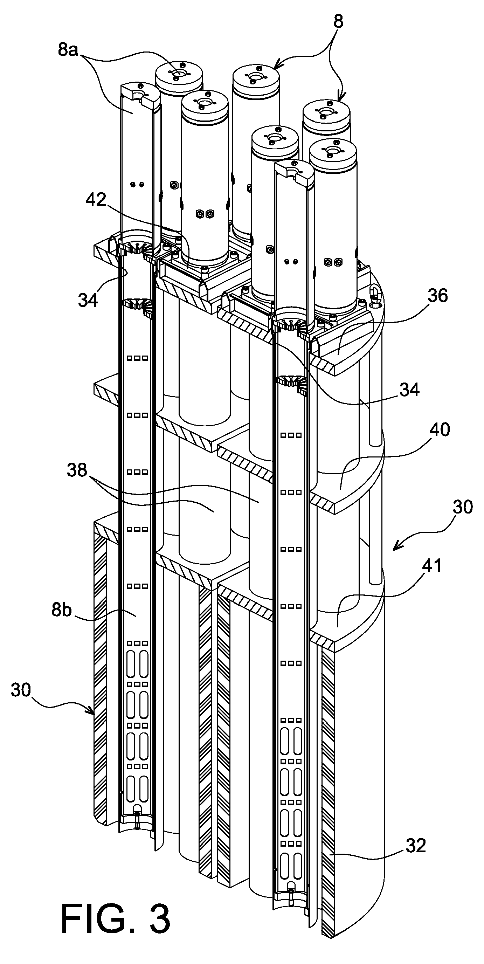

Chaque panier 30 définit une pluralité de logements 34 dans chacun desquels un guide de grappe 8 est destiné à être logé, comme cela est visible sur la figure 2. Il présente une plaque de tête 36 sur laquelle s'ouvrent tous les logements 34, cette plaque participant également au maintien de fourreaux 38 définissant les logements et s'étendant sur sensiblement toute la hauteur du panier. Comme évoqué ci-dessus, en partie basse du panier 30, la paroi latérale de blindage 32 entoure les fourreaux 38, comme cela est visible sur les deux paniers rapprochés de la figure 3. Sur ces paniers 30, il est de plus prévu une ou plusieurs plaques intermédiaires 40 de maintien des fourreaux 38, ainsi qu'une plaque 41 de fermeture de la zone sensible assemblée sur l'extrémité haute de la paroi épaisse 32. Cette plaque 41, également traversée par les fourreaux 38, sert aussi de protection radiologique vis-à-vis du rayonnement gamma.

Les guides de grappe usés 8 sont donc placés un a un dans les paniers blindés 30, toujours sous eau. Pour ce faire, des moyens classiques de manutention sont employés pour extraire chaque guide du rack 20, et pour le placer ensuite dans l'un des logements 34 des paniers. A cet égard, chaque panier présente ici sept logements 34, de manière à accueillir sept guides de grappe usés 8.

Une fois en place dans son logement de panier 34, chaque guide 8 voit uniquement sa partie inférieure 8b enfouie dans le panier, sa partie supérieure 8a non activée restant en saillie vers le haut à partir de la plaque de tête 36. Il est noté que la jonction mécanique 42 entre la partie inférieure et la partie supérieure de chaque guide peut servir de butée contre cette plaque de tête 36, afin que le guide repose par gravité dans le panier. Alternativement, l'extrémité basse du guide pourrait venir en appui contre une plaque de fond du panier, non prévue sur les réalisations des figures 2 et 3. Dans ce dernier cas, le fond serait percé d'une ou plusieurs ouvertures pour permettre la vidange et le séchage ultérieur du conteneur.

Egalement, il est noté que la paroi latérale de blindage 32 ne s'étend pas sur toute la hauteur de la partie inférieure 8a des guides de grappe, mais seulement sur la partie basse la plus activée.

Une fois l'un des paniers 30 chargé de ses sept guides de grappe 8, celui-ci est extrait de la piscine toujours à l'aide de moyens de manutention conventionnels, pour être ensuite introduit dans la cavité 44 d'un emballage 50. A cet effet, les fourreaux 38 des paniers 30 sont conçus pour laisser s'échapper l'eau lors de l'extraction de la piscine et éviter toute zone de rétention d'eau néfaste au séchage de la cavité de l'emballage une fois chargée. Lors de l'extraction du panier en dehors de la piscine, ce panier chargé des guides de grappe n'est entouré d'aucun autre élément. En particulier, il est équipé de ses propres moyens de protection radiologique, et n'a donc pas besoin d'être placé dans un emballage ou similaire pour être extrait de la piscine.

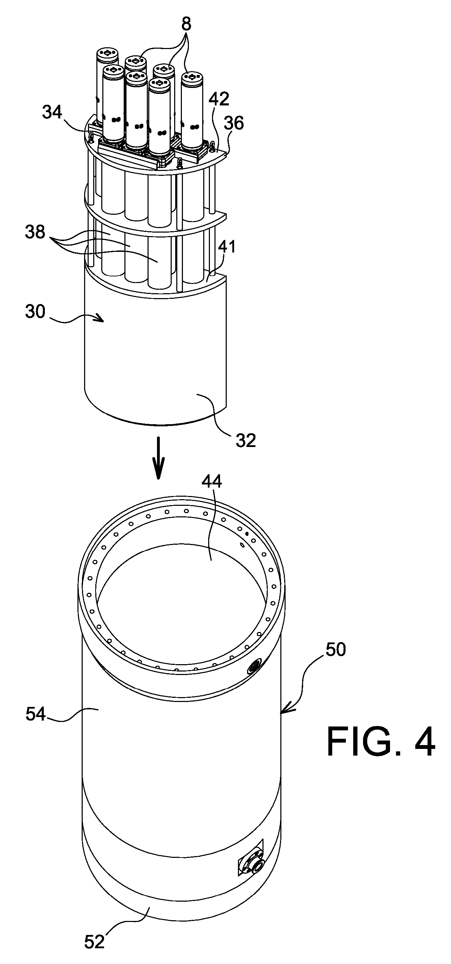

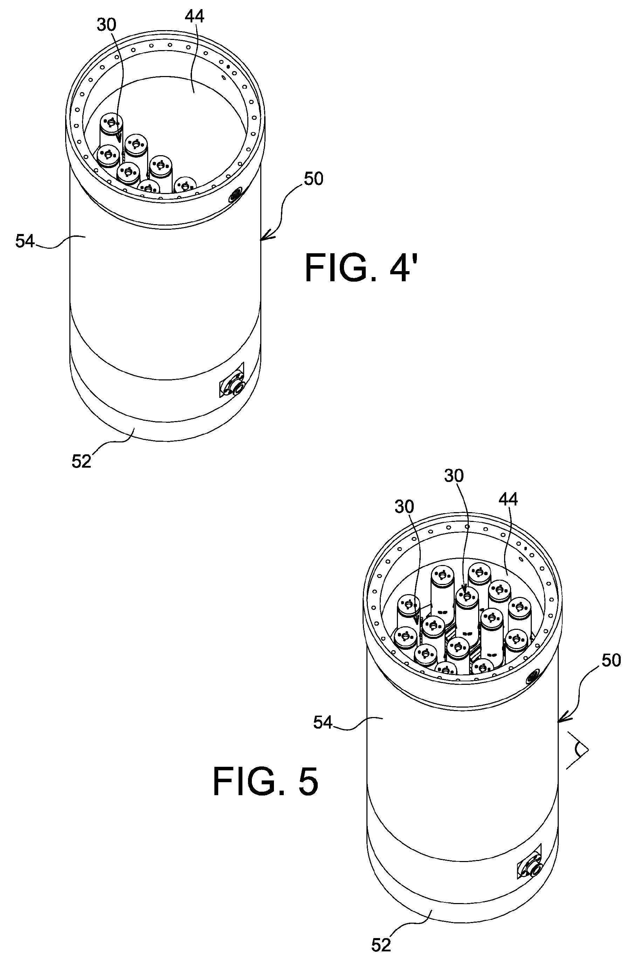

L'emballage 50 représenté sur les figures 4 à 7 présente une conception classique, à savoir comprenant un fond 52, un corps latéral 54 et un couvercle 56, ses extrémités opposées pouvant être équipés de capots amortisseurs 58. Le corps latéral 54 forme aussi des moyens de protection radiologique vis-à-vis du rayonnement gamma, par une forte épaisseur de matière aux endroits concernés, cette matière étant préférentiellement de l'acier.

L'emballage 50 définit donc la cavité 44 dans laquelle les deux paniers chargés 30 sont destinés à être logés, puis conservés pour les opérations ultérieures de transport sur voie publique, et/ou d'entreposage sur site. La cavité 44 est alors conçue pour réaliser le confinement des éléments radioactifs qui y sont logés, le panier ne contribuant pas à la réalisation de cette fonction. La figure 4 montre le chargement du premier panier 30, qui s'opère de préférence à la verticale depuis l'ouverture supérieure du corps latéral 54. La figure 4' montre l'emballage avec le premier panier 30 chargé dans la cavité 44, tandis que la figure 5 montre ce même emballage après le chargement du second panier 30, également réalisé de préférence à la verticale. Une fois chargés dans la cavité 44, ces paniers 30 reposent par gravité sur le fond 52 de l'emballage.

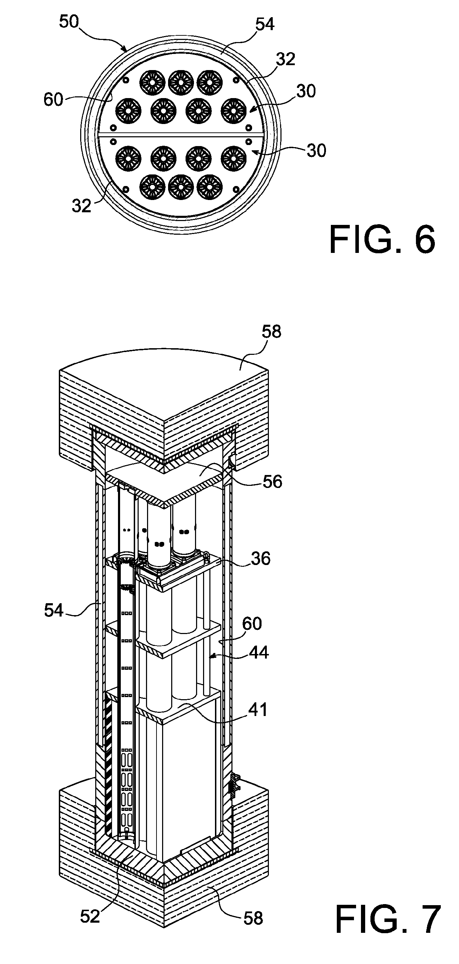

Comme cela est schématisé que la figure 6, une fois les paniers 30 logés dans l'emballage, les deux parois 32 définissent ensemble une surface latérale extérieure de section circulaire, sensiblement complémentaire de la surface latérale 60 de la cavité 44 de l'emballage. Cela permet aux paniers 30 d'être maintenus en position dans cette même cavité, par simple complémentarité de forme.

Ensuite, la cavité 44 est fermée par le couvercle 56 de l'emballage, tel que montré sur la figure 7, enfermant ainsi les paniers chargés 30 dans cette cavité, pour pouvoir ensuite transporter et/ou stocker les guides usés 8 à l'aide de ce conteneur formé par l'emballage 50 et les paniers 30.

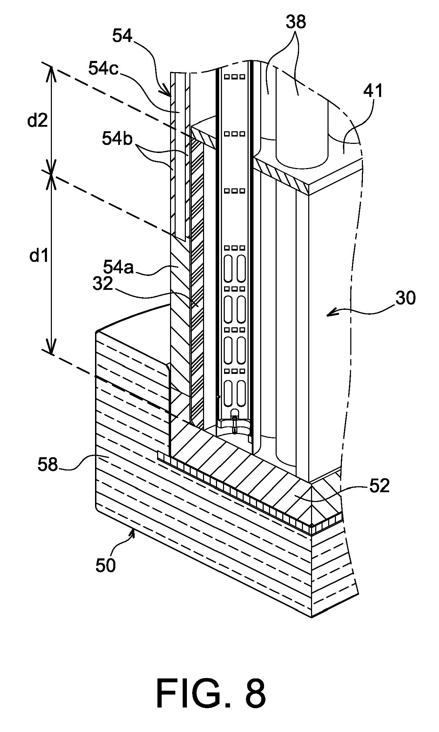

Sur la figure 8, il est montré la partie inférieure de ce conteneur, comprenant les moyens de protection radiologique prévus sur l'emballage 50 et les paniers 30.

A partir du fond 52 de l'emballage, sur une hauteur d1, la paroi latérale épaisse 32 des paniers et la partie inférieure pleine 54a du corps latéral 54 se superposent radialement, offrant une protection radiologique maximale entourant la partie inférieure activée des guides de grappe. Cette hauteur peut être de l'ordre de 1100 mm, pour une épaisseur globale de blindage de l'ordre de 215 mm, dont 85 mm provenant de la paroi 32 et 130 mm provenant de la partie inférieure pleine 54a du corps latéral 54. Le conteneur se prolonge ensuite sur une hauteur d2 où l'épaisseur de la paroi latérale 32 des paniers est conservée, mais seules deux viroles concentriques 54b forment le blindage du corps latéral 54. Ces deux viroles 54b présentent par exemple chacune une épaisseur de l'ordre de 30 mm, et l'espace annulaire situé entre celles-ci est éventuellement rempli d'une mousse 54c. Cette configuration à deux viroles concentrique est conservée jusqu'à proximité de l'extrémité supérieure de l'emballage, tandis que les parois 32 s'arrêtent quant à elles au niveau de la plaque 41.

Bien entendu, diverses modifications peuvent être apportées par l'homme du métier à l'invention qui vient d'être décrite, uniquement à titre d'exemples non limitatifs.

## Revendications

1. Procédé de chargement d'éléments radioactifs (8) dans un emballage (50), comprenant les étapes successives suivantes :
(a) mise en place, en piscine, d'une pluralité d'éléments radioactifs (8) dans un panier de rangement (30) équipé de moyens de protection radiologique (32) ;
(b) extraction, en dehors de la piscine, du panier (30) chargé des éléments radioactifs (8) ; et
(c) chargement dans l'emballage (50) dudit panier (30) chargé des éléments radioactifs (8).

2. Procédé selon la revendication 1, dans lequel chaque élément radioactif (8) repose par gravité dans son panier de rangement (30).

3. Procédé selon l'une quelconque des revendications précédentes, dans lequel les étapes (a) à (c) sont répétées plusieurs fois de manière à ce que plusieurs paniers (30) soient chargés dans ledit emballage.

4. Procédé selon la revendication 3, dans lequel les paniers (30) logés dans l'emballage (50) définissent ensemble une surface latérale extérieure sensiblement complémentaire de la surface latérale (60) d'une cavité (44) de l'emballage dans laquelle ils sont logés.

5. Procédé selon l'une quelconque des revendications précédentes, dans lequel il est également prévu des moyens de protection radiologique (54a, 54b) équipant l'emballage (50).

6. Procédé selon l'une quelconque des revendications précédentes, dans lequel l'emballage (50) est fermé par un couvercle (56) après le chargement dudit panier (30) chargé des éléments radioactifs (8), dans la cavité (44) de l'emballage.

7. Procédé selon l'une quelconque des revendications précédentes, dans lequel chaque panier de rangement (30) loge entre cinq et dix éléments radioactifs (8).

8. Procédé selon l'une quelconque des revendications précédentes, lesdits éléments radioactifs sont des guides de grappe usés (8) ou des assemblages de combustible irradiés.

9. Procédé de transport et/ou d'entreposage d'éléments radioactifs (8) comprenant, avant ledit transport et/ou l'entreposage, la mise en oeuvre du procédé de chargement selon l'une quelconque des revendications précédentes.

## Patentansprüche

1. Verfahren zum Laden von radioaktiven Elementen (8) in eine Verpackung (50), umfassend die folgenden aufeinanderfolgenden Schritte:
(a) Platzieren einer Mehrzahl von radioaktiven Elementen (8) im Abklingbecken in einen Ordnungskorb (30), der mit radiologischen Schutzmitteln (32) ausgestattet ist;
(b) Herausnehmen des mit den radioaktiven Elementen (8) beladenen Korbs (30) aus dem Abklingbecken; und
(c) Laden des mit den radioaktiven Elementen (8) beladenen Korbs (30) in die Verpackung (50).

2. Verfahren nach Anspruch 1, bei dem jedes radioaktive Element (8) durch Schwerkraft in seinem Ordnungskorb (30) ruht.

3. Verfahren nach einem der vorhergehenden Ansprüche, bei dem die Schritte (a) bis (c) mehrere Male wiederholt werden, derart, dass mehrere Körbe (30) in die Verpackung geladen werden.

4. Verfahren nach Anspruch 3, bei dem die in der Verpackung (50) untergebrachten Körbe (30) gemeinsam eine seitliche Außenoberfläche definieren, die im Wesentlichen komplementär ist zu der seitlichen Oberfläche (60) eines Hohlraums (44) der Verpackung, in der sie untergebracht sind.

5. Verfahren nach einem der vorhergehenden Ansprüche, bei dem ferner radiologische Schutzmittel (54a, 54b) vorgesehen sind, mit denen die Verpackung (50) ausgestattet ist.

6. Verfahren nach einem der vorhergehenden Ansprüche, bei dem die Verpackung (50) mit einem Deckel (56) verschlossen wird, nachdem der mit den radioaktiven Elementen (8) beladene Korb (30) in den Hohlraum (44) der Verpackung geladen wird.

7. Verfahren nach einem der vorhergehenden Ansprüche, bei dem jeder Ordnungskorb (30) zwischen fünf und zehn radioaktiven Elementen (8) aufnimmt.

8. Verfahren nach einem der vorhergehenden Ansprüche, bei dem die radioaktiven Elemente gebrauchte Bündelführungen (8) oder bestrahlte Brennstoffanordnungen sind.

9. Verfahren zum Transport und/oder zur Zwischenlagerung von radioaktiven Elementen (8), umfassend die Durchführung des Ladeverfahrens nach einem der vorhergehenden Ansprüche vor dem Transport und/oder der Zwischenlagerung.

## Claims

1. Method of loading radioactive elements (8) in a package (50), comprising the successive following steps in this order:
(a) placement of a plurality of radioactive elements (8) in a storage basket (30) provided with radiological protection means (32), in the pool;
(b) extraction of the basket (30) containing the radioactive elements (8) out of the pool; and
(c) loading said basket (30) containing the radioactive elements (8) in the package (50).

2. Method according to claim 1, in which each radioactive element (8) is held in place by gravity in its storage basket (30).

3. Method according to any one of the previous claims, in which steps (a) to (c) are repeated several times such that several baskets (30) are loaded in said package.

4. Method according to claim 3, in which the baskets (30) housed in the package (50) together define an external lateral surface that is a approximately complementary to the lateral surface (60) of a cavity (44) of the package in which they are housed.

5. Method according to any one of the previous claims, in which radiological protection means (54a, 54b) fitting the package (50) are also provided.

6. Method according to any one of the previous claims, in which the package (50) is closed by a lid (56) after said basket (30) containing the radioactive elements (8) has been loaded in the package cavity (44).

7. Method according to any one of the previous claims, in which each storage basket (30) houses between five and ten radioactive elements (8).

8. Method according to any one of the previous claims, said radioactive elements are worn rod cluster control guides (8) or irradiated fuel assemblies.

9. Method of transport and/or interim storage of radioactive elements (8) including implementation of the loading method according to any one of the previous claims, before said transport and/or interim storage.
